Europäisches Patentamt

(19) European Patent Office

Office européen des brevets

(11) **EP 0 988 505 B1**

(12) **EUROPÄISCHE PATENTSCHRIFT**

(45) Veröffentlichungstag und Bekanntmachung des Hinweises auf die Patenterteilung:
**09.01.2002 Patentblatt 2002/02**

(21) Anmeldenummer: **98933603.7**

(22) Anmeldetag: **10.06.1998**

(51) Int Cl.$^7$: **G01B 11/03**

(86) Internationale Anmeldenummer:
**PCT/EP98/03526**

(87) Internationale Veröffentlichungsnummer:
**WO 98/57121 (17.12.1998 Gazette 1998/50)**

(54) **Koordinatenmessgerät mit biegeelastischer Tasterverlängerung und optischem Sensor**

Coordinate measuring machine with flexible feeler extension and optical sensor

Appareil de mesure de coordonnées avec une prolongation de palpeur élastique et capteur optique

(84) Benannte Vertragsstaaten:
**AT BE CH DE DK ES FI FR GB IE IT LI LU NL PT SE**

(30) Priorität: **12.06.1997 DE 29710242 U**
**06.10.1997 DE 19743969**
**13.02.1998 DE 19805892**

(43) Veröffentlichungstag der Anmeldung:
**29.03.2000 Patentblatt 2000/13**

(73) Patentinhaber: **Werth Messtechnik GmbH**
**35394 Giessen (DE)**

(72) Erfinder:
• **CHRISTOPH, Ralf**
**D-35641 Schöffengrund (DE)**
• **TRAPET, Eugen**
**D-38176 Bortfeld (DE)**
• **SCHWENKE, Heinrich**
**D-38118 Braunschweig (DE)**

(74) Vertreter:
**Stoffregen, Hans-Herbert, Dr. Dipl.-Phys.**
**Patentanwalt, Friedrich-Ebert-Anlage 11b**
**63450 Hanau (DE)**

(56) Entgegenhaltungen:
**WO-A-88/07656**          **WO-A-93/07443**
**WO-A-93/14375**          **DE-A- 19 514 815**
**NL-C- 1 003 175**

**Beschreibung**

Die Erfindung bezieht sich auf ein Verfahren zur Messung von Strukturen eines Objekts mittels eines einem Koordinatenmessgerät zugeordneten von einer Tasterverlängerung ausgehenden-Tastelementes, das mit dem Objekt in Berührung gebracht und sodann seine Position bestimmt wird. Ferner nimmt die Erfindung Bezug auf ein Koordinatenmessgerät zur Messung von Strukturen eines Objekts mittels eines ein Tastelement und eine Tasterverlängerung umfassenden Taster, einem Sensor zur optischen Bestimmung des Tastelements und/oder zumindest einer diesem unmittelbar zugeordneten Zielmarke und einer Auswerteeinheit, mit der aus der Position des optischen Sensors zum Koordinatensystem des Koordinatenmessgerätes und der mittels des optischen Sensors unmittelbar gemessenen Position des Tastelements und/oder der Zielmarke die Strukturen berechenbar sind.

Zur Messung von Strukturen eines Objektes werden Koordinatenmessgeräte mit elektromechanisch arbeitenden Tastern verwendet, mit denen auf indirektem Wege die Strukturiage bestimmt wird, d. h., die Position des Antastelementes (Kugel) wird über einen Taststift übertragen. Die hierbei auftretenden Verformungen des Taststiftes in Verbindung mit den wirkenden Reibkräften führen zur Verfälschung der Messergebnisse. Durch die starke Kraftübertragung kommt es ferner zu Messkräften, die typischerweise größer als 10 N sind. Die geometrische Ausgestaltung solcher Tastsysteme beschränkt diese auf Kugeldurchmesser größer als 0,3 mm. Die dreidimensionale Messung kleiner Strukturen im Bereich von wenigen Zehntel Millimetern und das Antasten von leicht verformbaren Prüflingen ist somit problematisch bzw. nicht möglich. Bedingt durch die nicht vollständig bekannten Fehlereinflüsse durch Verformung durch Taststift und Tastelement sowie die aufgrund z. B. von Stick-Slip-Effekten unbekannten Antastkräfte entstehen Messunsicherheiten, die typischerweise größer als 1μm sind.

Ein entsprechendes mechanisch abtastendes Koordinatenmessgerät ist zum Beispiel der DE 43 27 250 A1 zu entnehmen. Dabei kann eine visuelle Kontrolle des mechanischen Antastvorganges mit Hilfe eines Monitors erfolgen, indem der Tastkopf über eine Videokamera beobachtet wird. Dabei kann gegebenenfalls der Tastkopf in Form eines sogenannten Schwingquarztasters ausgebildet sein, der bei Berührung mit der Werkstückoberfläche gedämpft wird. Mittels der Videokamera ist es somit möglich, die Position der Tastkugel relativ zum Werkstück bzw. der dort zu vermessenden Bohrung auf dem Monitor zu verfolgen und den Antastvorgang beim Eintauchen in die Bohrung manuell zu beobachten und zu steuern. Das eigentliche Messen erfolgt wiederum elektromechanisch, so dass die oben genannten Nachteile erhalten bleiben.

Eine optische Beobachtung eines Tastkopfes bei einem Koordinatenmessgerät ist auch der DE 35 02 388 A1 zu entnehmen.

Um die genaue Position der Maschinenachsen eines Koordinatenmessgerätes zu bestimmen, werden nach der DE 43 12 579 A1 zumindest sechs Sensoren an einer Pinole und/oder einem Messkopf angebracht, um den Abstand zu einer Referenzfläche bestimmen zu können. Auf das Antasten der Objektgeometrien wird hier nicht weiter eingegangen, sondern ein berührungsloses Verfahren als Ersatz für klassische inkrementelle Wegmesssysteme beschrieben.

In der US 4,972,597 wird ein Koordinatenmessgerät mit einem Taster beschrieben, dessen Tasterverlängerung mittels einer Feder in ihrer Position vorgespannt ist. Ein in einem Gehäuse verlaufender Abschnitt der Tasterverlängerung weist zwei zueinander beabstandete Licht emittierende Elemente auf, um mittels eines Sensorelementes die Position der Tasterverlängerung und damit indirekt die eines am äußeren Ende der Tasterveriängerung angeordneten Tastelementes zu bestimmen.

Die optische Sensorik ersetzt hier ebenfalls die klassischen Wegmesssysteme von elektromechanischen Tastsystemen. Der eigentliche Antastvorgang erfolgt wiederum via Kraftübertragung von Tastelement zum Taststift über Federelemente zum Sensor. Die oben genannten Probleme mit Durchbiegung und Antastkraft bleiben wiederum erhalten. Es handelt sich um ein indirektes Verfahren.

Um große Körper wie Flugzeugteile zu vermessen, sind Taststifte mit Lichtquellen bzw. reflektierenden Zielmarken bekannt, deren Positionen optisch erfasst werden (DE 36 29 689 A1, DE 26 05 772 A1, DE 40 02 043 C2). Die Taster selbst werden von Hand oder mittels eines Roboters entlang der Oberfläche des zu messenden Körpers bewegt.

Bei diesem Verfahren wird die Position des Tastelementes stereoskopisch durch Triangulation oder ähnliches in seiner Lage stimmt. Die Auflösung des Gesamtmesssystems ist somit direkt durch die Sensorauflösung begrenzt. Der Einsatz solcher Systeme kann somit nur bei relativ geringen Anforderungen an das Verhältnis zwischen Messbereich und Genauigkeit in Frage kommen. Praktisch ist er auf das Messen großer Teile beschränkt.

Aus der WO 93/07443 ist es bekannt, mittels optischer Sensoren Strukturen eines Objektes mittelbar zu bestimmen, wobei ein starrer Taster zumindest drei Zielmarken aufweist, die zur Bestimmung eines Koordinatenmesspunktes mit einem Winkelsensor erfasst werden.

Eine andere Möglichkeit, optisch die Strukturen eines Körpers zu messen, wird in der WO 88/07656 durch ein Interferometersystem beschrieben. Das System umfasst einen Taster mit einer stabförmigen Tasterverlängerung, an deren Ende eine Kugel angeordnet ist, die mit dem Körper in Berührung gebracht wird, dessen Position bestimmt werden soll. Die Tasterverlängerung geht von einer plattenförmigen Halterung aus, die in drei Richtungen zu dem Objekt verstellbar ist Von den Halterungen gehen Retroreflektoren aus, die mit von Interferometern emittierter Strahlung beaufschlagt werden. Die reflektierte Strahlung wird von den Interferometern erfasst, um so den Strahlengang zwischen den Interferometern und den Retroreflektoren zur Bestimmung der Position des Gegenstandes messen zu können.

Der Veröffentlichung US-Z.: Quality, April 1998, S. 20 ff. ist der Vorschlag zu entnehmen, Strukturen eines Objektes mittels eines Tastelementes durch Bestimmung dessen Position mit einem optischen Sensor zu messen. Dabei ist es zwingend erforderlich, dass der Taster scharf abgebildet wird.

Aus der Veröffenlichung US-Z.: American Machmist, April 1994, S. 29 - 32 ist es bekannt, zur Bestimmung der Geometrie eines Werkstückes verschiedene Mess-Systeme zu nutzen. Hierbei handelt es sich um die Möglichkeit, einerseits eine Oberfläche mit einer Videokamera auszumessen und zum anderen eine taktile Messung durchzuführen, die als Alternativen abgehandelt werden.

In US-Z.: Tooling & Production, October 1990, S. 76 - 78 wird ein Taster wahlweise zum rein taktilen, also mechanischen Messen bzw. zur optischen Erfassung benutzt, um Strukturen zu bestimmen. Dabei muss der Taster, der mit dem Körper in Berührung gebracht wird, ebenfalls stets optisch klar abbildbar sein.

Der Veröffentlichung US-Z.: Plastics World, August 1989, Nr. 8, ist eine Abbildung eines Tastelementes zu entnehmen, dessen Position optisch erfasst ist. Wie die Abbildung verdeutlicht, wird ein starrer Taster benutzt, der es nicht ermöglicht, kleinste Dimensionen bzw. Materialien zu vermessen, die sehr weich sind und somit nicht mit hohen Antastkräften beaufschlagt werden dürfen, da andernfalls eine Verfälschung der Geometrie erfolgen würde. Eine entsprechende Offenbarung ergibt sich auch aus der US-Z.: Quality, Januar 1990, wie die Abbildung verdeutlicht.

Aus der Firmendruckschrift Carl Zeiss Jena, Technische Messgeräte, S. 54 und 55 ist ein Bohrungsmessmikroskop bekannt, bei dem im Durchlichtverfahren allein der Abstand zwischen zwei diametral liegenden Punkten einer zu messenden Bohrung unter mikroskopischer Beobachtung bestimmt wird.

Der vorliegenden Erfindung liegt das Problem zugrunde, ein Verfahren und ein Koordinatenmessgerät der eingangs genannten Art so weiterzubilden, dass beliebige Strukturen mit einer hohen Messgenauigkeit bestimmt werden können, wobei eine präzise Lagebestimmung des mit dem Objekt in Berührung zu bringenden Tastelementes erfolgen soll. Insbesondere soll die Möglichkeit gegeben sein, Bohrungen, Löcher, Hinterschneidungen oder ähnliches auszumessen, wobei auch Strukturen im Bereich zwischen 50 und 100 µm mit einer Messgenauigkeit von zumindest ± 0,5 um bestimmt werden sollen.

Erfindungsgemäß wird das Problem im Wesentlichen dadurch gelöst, dass das Tastelement über einen biegeelastischen Schaft als die Tasterverlängerung mit dem Koordinatenmessgerät verbunden wird, dass die Position des Tastelementes oder einer von dem biegeelastischen Schaft ausgehenden dem Tastelement unmittelbar zugeordneten Zielmarke mit einem optischen Sensor direkt bestimmt wird und dass zur Messung der Struktur des Objektes mit dem optischen Sensor bestimmte Koordinaten des Tastelementes bzw. der Zielmarke mit denen des Koordinatenmessgerätes verknüpft werden, wobei die Position-im Durchlicht- und/oder Auflichtverfahren und/oder durch Selbststrahlen des Tastelementes bzw. der Zielmarke bestimmt wird.

Dabei wird das Tastelement und/oder die zumindest eine Zielmarke vom Bereich des optischen Sensors her in die zu messende Position gebracht. Mit anderen Worten wird der Taster dem Objekt von dessen sensorzugewandten Seite zugeführt. Taster und Sensor sind dabei als Einheit innerhalb eines Koordinatenmessgerätes verstellbar und deren gemeinsame Position hochgenau messbar. Es erfolgt demnach eine gekoppelte Bewegung, die eine geringe Unsicherheit der Ergebnisse sicherstellt. Dabei wird insbesondere die Position des Tastelements und/oder der zumindest einen Zielmarke mittels reflektierender und/oder das Objekt durchdringender und/oder von dem Tastelement bzw. der Zielmarke abstrahlender Strahlung mit dem Sensor bestimmt.

Erfindungsgemäß wird die durch Berührung des Objekts bedingte Position des Tastelements optisch bestimmt, um unmittelbar aus der Position des Tastelementes selbst bzw. einer Zielmarke den Verlauf einer Struktur zu messen. Dabei kann die Auslenkung des Tastelements durch Verschiebung des Bildes auf einem Sensorfeld eines elektronischen Bildverarbeitungssystems mit elektronischer Kamera erfasst werden. Auch besteht die Möglichkeit, die Auslenkung des Tastelements durch Auswerten einer Kontrastfunktion des Bildes mittels eines elektronischen Bildverarbeitungssystems zu bestimmen. Eine weitere Möglichkeit zur Bestimmung der Auslenkung besteht darin, diese aus einer Größenänderung des Bildes einer Zielmarke zu bestimmen, aus dem der strahlenoptische Zusammenhang zwischen Objekt-Abstand und Vergrößerung resultiert. Auch kann die Auslenkung des Tastelements durch scheinbare Größenänderung einer Zielmarke ermittelt werden, die aus dem Kontrastverlust durch Defokussierung resultiert. Dabei wird grundsätzlich die Auslenkung senkrecht zur optischen Achse der elektronischen Kamera bestimmt. Alternativ kann die Position des Tastelements bzw. der zumindest einen diesem zugeordneten Zielmarke mittels eines Photogrammetriesystems bestimmt werden. Bei Vorhandensein mehrerer Zielmarken kann deren Positionen optisch erfasst und sodann die Position des Tastelements berechnet werden, da zwischen diesem und den Zielmarken eine eindeutige feste Beziehung besteht.

Abweichend vom vorbekannten Stand der Technik erfolgt erfindungsgemäß eine unmittelbare Positionsmessung des Tastelementes oder der dieser zugeordneten Zielmarke, um die Struktur eines Objektes zu bestimmen. Dabei weisen Tastelement und Zielmarke eine eindeutige räumliche Zuordnung derart auf, dass eine Relativbewegung zueinander nicht erfolgt, also geringe Abstände eingehalten werden. Hierdurch ist es unbeachtlich, ob die Tasterverlängerung, von der die Zielmarke bzw. das Tastelement ausgehen, beim Messvorgang verformt wird, da nicht - wie der Stand der Technik es vorsieht - eine indirekte Messung des Tastelementes bzw. der Zielmarke, sondern eine direkte Messung dieser erfolgt. Mit dem erfindungsgemäßen Verfahren können Löcher, Bohrungen, Vertiefungen, Hinterschneidungen oder sonstige Strukturen mit einer Erstreckung im Bereich von zumindest 50 - 100 μm mit einer Messgenauigkeit von zumindest ± 0,5 um ausgemessen werden. Somit ergibt sich die Möglichkeit, dreidimensionale Messungen kleinster Strukturen durchzuführen, ein Verlangen, das seit langem zum Beispiel in der Medizintechnik für minimalinvasive Chirurgie, in der Mikrosensorik oder Automobiltechnik, soweit zum Beispiel Einspritzdüsen betroffen sind, besteht, ohne dass es befriedet werden konnte. Durch die unmittelbare Messung der Tastelementposition bzw. der dieser eindeutig zugeordneten zueinander relativ nicht verschiebbaren Zielmarke wird ein direktes mechanisch-optisches Messverfahren mit einem Koordinatenmessgerät zur Verfügung gestellt, welches mit hoher Präzision arbeitet und auch dann nicht zu Verfälschungen von Messergebnissen führt, wenn die Tasterverlängerung beim Messvorgang verformt werden sollte.

Ein Koordinatenmessgerät der eingangs genannten Art zeichnet sich dadurch aus, dass die Tasterverlängerung biegeelastisch ausgebildet ist.

Dabei kann das Tastelement und/oder die zumindest eine Zielmarke selbststrahlend und/oder als Reflektor ausgebildet sein.

Das Tastelement und/oder die Zielmarke sollten vorzugsweise als eine Strahlung räumlich abstrahlender oder reflektierender Körper wie Kugel oder Zylinder ausgebildet sein.

Erfindungsgemäß ist das Tastelement mit der Tasterverlängerung wie ein Schaft verbunden, die bzw. der biegeelastisch ausgebildet ist. Das Verbinden kann durch Kleben, Schweißen oder sonstige geeignete Verbindungsarten erfolgen. Auch kann das Tastelement und/oder die Zielmarke ein Abschnitt der Tasterverlängerung selbst sein. Insbesondere ist die Tasterverlängerung bzw. der Schaft als Lichtleiter ausgebildet oder umfasst einen solchen, um über diesen dem Tastelement bzw. der Zielmarke das erforderliche Licht zuzuführen.

Der Schaft selbst kann endseitig als Taster ausgebildet sein oder einen solchen urnfassen. Insbesondere sollte das Tastelement und/oder die Zielmarke auswechselbar mit der Tasterverlängerung wie Schaft verbunden sein.

Um nahezu beliebige Strukturen bestimmen zu können, ist des Weiteren vorgesehen, dass der Taster von einer in fünf Freiheitsgeraden justierbaren Halterung ausgeht. Die Halterung selbst kann wiederum mit dem Sensor eine Einheit bilden bzw. mit dem Sensor verbunden sein.

Auch besteht die Möglichkeit, dass das Tastelement und/oder die Zielmarke als selbstleuchtendes elektronisches Element wie LED ausgebildet ist oder ein solches umfasst.

Erfindungsgemäß wird ein Tastsystem für Koordinatenmessgeräte vorgeschlagen, das die Vorteile optischer und mechanischer Tastsysteme kombiniert, wobei eine Verwendung insbesondere bei der mechanischen Messung sehr kleiner Strukturen, in denen herkömmliche Tastsysteme nicht mehr einsetzbar sind, möglich ist. Aber auch eine einfache Auf- und Umrüstung optischer Messgeräte für mechanische Messaufgaben wird dadurch möglich.

So ist vorgesehen, ein Tast- oder Antastelement oder eine diesem zugeordnete Zielmarke durch einen Sensor wie elektronische Kamera in seiner Position zu bestimmen, nachdem ersteres in mechanischem Kontakt mit einem Werkstück gebracht wurde. Dadurch, dass entweder das Tastelement selbst oder die Zielmarke, die unmittelbar mit dem Tastelement verbunden ist, in der Position vermessen wird, haben Verformungen eines den Taster aufnehmenden Schaftes keinen Einfluss auf das Messsignal. Bei der Vermessung muss weder das elastische Verhalten des Schaftes berücksichtigt werden, noch können plastische Verformungen, Hysteresen und Drifterscheinungen der mechanischen Kopplung zwischen Tastelement und dem Sensor die Messgenauigkeit beeinflussen. Auslenkungen in der Richtung senkrecht zur Sensor- wie Kameraachse lassen sich direkt durch Verschiebung des Bildes in einem Sensorfeld insbesondere einer elektronischen Kamera bestimmen. Die Auswertung des Bildes kann mit einer bereits in einem Koordinatenmessgerät installierten Bildverarbeitung erfolgen. Damit ist ein zweidimensional arbeitendes Tastsystem realisiert, das sehr einfach an eine optische Auswerteeinheit gekoppelt werden kann.

Für eine Sensierung der Auslenkung in Richtung der optischen Sensor- wie Kameraachse sind erfindungsgemäß mehrere Möglichkeiten gegeben, so u. a.:

  1. Die Auslenkung des Tastelements in Richtung der Sensorachse (Kameraachse) wird durch ein Fokussystem gemessen, wie dies in der optischen Koordinatenmesstechnik bei der Fokussierung auf die Werkstückoberfläche bereits bekannt ist. Hierbei wird die Kontrastfunktion des Bildes in der elektronischen Kamera ausgewertet.

  2. Die Auslenkung des Tastelements in Richtung der Sensor- bzw. Kameraachse wird dadurch gemessen, dass die Abbildungsgröße einer Zielmarke ausgewertet wird, so z. B. bei einer kreis- oder ringförmigen Zielmarke die Veränderung des Durchmessers. Dieser Effekt ist bedingt durch die strahlenoptische Abbildung und lässt sich durch die Ausgestaltung der optischen Einheit gezielt optimieren. In der Koordinatenmesstechnik werden häufig sogenannte telezentrische Objektive verwendet, die eine weitestgehend konstante Vergrößerung auch bei Abweichung von der Fokusebene realisieren sollen. Diese wird durch eine Verlegung der optischen Eintrittspupille in das "Unendliche" erreicht. Für die oben beschriebene Auswertung wäre eine Optimierung mit umgekehrten Vorzeichen nützlich: Bereits eine kleine Abweichung aus der Fokusebene soll in einer deutlichen Änderung des Abbildungsmaßstabes resultieren. Dies ist z. B. durch die Verlegung der optischen Eintrittspupille in die Höhe des objektseitigen Brennpunktes zu erreichen. Dabei sollte nach Möglichkeit eine hohe Schärfentiefe realisiert sein, die eine kontrastreiche Abbildung der Zielmarke über einen relativ weiten Entfernungsbereich erlaubt. Eine ideale optische Einheit im Sinne ihrer Abbildungseigenschaften wäre für die oben beschriebene Anwendung z. B. eine Lochkamera. Durch die Verwendung einer ringförmigen Zielmarke lassen sich Größenänderungen, die aus Unschärfe resultieren, minimieren: Der mittlere Ringdurchmesser ändert sich in erster Näherung durch Unschärfe nicht, sondern nur die Ringbreite.

3. Auch bei einer dritten Möglichkeit wird die Größenänderung der Zielmarke ausgewertet, jedoch die, welche sich aus der Kombination von strahlenoptischer Größenänderung und der scheinbaren Vergrößerung durch unscharfe Ränder ergibt. Gegenüber der Auswertung der Unschärfefunktion macht sich dieses Verfahren zunutze, dass die tatsächliche Größe der Zielmarke unveränderlich ist.

Erfindungsgemäß wird zur Strukturbestimmung von Objekten die direkte Messung einer Tastelementposition genutzt. Grundsätzlich kommen für diese direkte Messung viele unterschiedliche physikalische Prinzipien in Frage. Da die Messung der Tastelementauslenkung in einem großen Messbereich im Raum sehr genau erfolgen muss, z. B. um kontinuierliche Scanvorgänge zu ermöglichen, und um einen großen Überhub bei Objektantastung aufzunehmen (z. B. aus Sicherheitsgründen, aber auch um den Aufwand für eine genaue Positionierung zu verringern), kann auch ein photogrammetrisches Verfahren eingesetzt werden. Zwei Kamerasysteme mit zueinander geneigten Achsen könnten benutzt werden. Es können im Wesentlichen die aus der Industriephotogrammetrie bekannten Auswertetechniken eingesetzt werden.

Mit zwei z. B. zur Längsrichtung des Tastelements bzw. der diesem zugewandten Enden einer Tasterverlängerung wie Schaft geneigt "blickenden" Kameras sind alle Messaufgaben lösbar, bei denen das Tastelement nicht hinter Hinterschneidungen "verschwindet". Die Verwendung einer redundanten Anzahl von Kameras (z. B. drei) ermöglicht auch an Objekten mit steilen Konturen zu messen. Bei der Messung in kleinen Bohrungen kann eine Kamera benutzt werden, die so angeordnet ist, dass sie in Längsrichtung des Tastelements bzw. der Tasterverlängerung auf das Tastelement "blickt". Grundsätzlich ist bei zweidimensionalen Messungen (also z. B. bei Messungen in Bohrungen) eine einzige Kamera ausreichend, die auf die Längsrichtung der das Tastelement haltenden Tasterverlängerung wie Schaft ausgerichtet ist.

Für die erfindungsgemäße Verwendung des Tasters ist kein aktiv lichtabstrahlendes Tastelement oder eine sonstige aktive Zielmarke zwingend erforderlich. Besonders hohe Genauigkeiten erreicht man mit lichtabstrahlenden Tastkugeln bzw. sonstiger lichtabstrahlender Zielmarken an der Tasterverlängerung. Das Licht aus einer Lichtquelle wird dabei dem Tastelement wie -kugel oder sonstigen Zielmarken der Tasterverlängerung über z. B. eine Lichtleitfaser zugeführt, die selbst den Taster-Schaft oder die Tasterverlängerung darstellen kann. Auch kann das Licht im Schaft oder in den Zielmarken erzeugt werden, indem diese z. B. LEDs enthalten. Der Grund für diese Konstruktionsweisen ist, dass elektronische Bildsysteme wie photogrammetrische Systeme, insbesondere solche für mikroskopisch kleine Strukturen, eine hohe Lichtintensität benötigen. Wird dieses Licht dem Tastelement direkt gezielt zugeführt, reduziert sich die notwendige Lichtleistung erheblich, und somit auch die Wärmebelastung des Objekts während der Messung. Bei Verwendung von Kugeln als Tastelement ergibt sich ein ideal kontrastreiches und ideal kreisförmiges Bild der Tastkugel aus allen Blickrichtungen. Insbesondere gilt dies bei der Verwendung einer volumenstreuenden Kugel. Störungen durch Abbildungen von Strukturen des Objekts selbst werden vermieden, da das Objekt selbst nur in unmittelbarer Nähe der Tastkugel hell beleuchtet wird. Dabei wird jedoch das durch Spiegelungen am Objekt entstehende Bild der Tastkugel praktisch immer weniger hell erscheinen als die Tastkugel selbst. Somit sind Fehler problemlos zu korrigieren. Diese Vorteile haben von außen beleuchtete Zielmarken nicht zwingend. Auch besteht die Möglichkeit, die Zielmarken fluoreszierend auszuführen, so dass eingestrahltes und abgestrahltes Licht frequenzmäßig getrennt sind, und sich somit ebenfalls die Zielmarken im Bild deutlicher von der Umgebung isolieren lassen. Gleiche Überlegungen gelten für das Tastelement selbst.

Um auch in kleinen Bohrungen oder an sehr steilen Strukturen zu messen, wenn das Tastelement wegen Abschattung selbst nicht oder nicht von mehreren Kameras erfasst werden kann, lässt sich erfindungsgemäß die Position, die Orientierung und die Krümmung der Lichtleitfaser in den sichtbaren Teilbereichen sensorisch wie photogrammetrisch erfassen. Daraus kann die Position des Tastelements berechnet werden, z. B. über einen Ansatz der Faserbiegung in Form einer Parabel mit linearem oder quadratischen Term. Die Messung bei unterschiedlichen Überhüben (mehr oder weniger ins Objekt hinein positioniert) und anschließend Mittelung der Tastelementposition erhöht die Messgenauigkeit. Die optische wie photogrammetrische Messung der Faser wird durch eine gleichförmige Lichtabstrahlung der Faser erleichtert, die durch Verwendung von volumenstreuendem Fasermaterial, der Aufbringung einer diffus abstrahlenden Schicht auf der Faseroberfläche oder einer sonstigen geeigneten Wahl der Faserzusammensetzung und Fasergeometrie (z. B. Fertigung aus Material mit relativ geringem Brechungsindex) verbessert werden kann.

Es ist auch erfindungsgemäß möglich. auf der Lichtleitfaser weitere beleuchtete Kugeln oder sonstige Zielmarken anzubringen, die Position dieser Zielmarken insbesondere photogrammetrisch zu erfassen und die Position des Tastelements entsprechend zu berechnen. Kugeln stellen dabei vergleichsweise ideale, eindeutige Zielmarken dar, die es auf der Faser ansonsten nicht gibt. Eine gute Lichteinkopplung in die Kugeln erreicht man durch Störung der Lichtleitereigenschaften des Schafts, indem man z. B. die durchbohrten volumenstreuenden Kugeln auf den Schaft, d. h. der Tasterverlängerung aufsteckt und mit diesem verklebt. Auch können die volumenstreuenden Kugeln seitlich am Schaft angeklebt sein, wobei auch eine Lichteinkopplung möglich ist, vorausgesetzt, der Schaft führt bis zu seiner Oberfläche Licht, weist also einen Mantel an der Klebestelle nicht auf. Eine besonders hohe Genauigkeit wird erreicht, wenn die Tastelementposition als Funktion der Faserlage und Faserkrümmung (Zonen der Faser in einigem Abstand von dem Tastelement) experimentell erfasst (kalibriert) wird. Auch ist hier wieder die Abmessung von entlang der Faser aufgebrachten Zielmarken anstelle der Abmessung der Faser selbst möglich.

Die Kalibrierung kann z. B. durch Antastung einer Kugel aus unterschiedlichen Richtungen und mit unterschiedlichen Kräften (mehr oder weniger ins Objekt "hineinpositioniert") geschehen, oder sie erfolgt durch bekannte relative Positionierung des Tastsystems gegenüber der geklemmten Tastkugel.

Die Trennung der Elemente Tastelement wie Tastkugel und Zielmarken verringert zusätzlich die Wahrscheinlichkeit einer Störung der Messung der Tastelementposition durch Reflexe der Zielmarken auf der Objektoberfläche.

Es können erfindungsgemäß mehrere Taster nacheinander im Einsatz sein, z. B. durch eine einfache Wechseleinrichtung (z. B. Revolver mit mehreren Tastern) können verschiedene Tastelemente bzw. Taststifte ins Blickfeld eingeschwenkt werden. Es können erfindungsgemäß auch mehrere Tastelemente gleichzeitig im Einsatz sein. Die Identifikation des aktiven Tastelements oder -stifts ist beispielsweise durch Abschalten der Beleuchtung der nicht aktiven Taststifte oder über eine sonstige Codierung wie z. B. durch Zielmarkengröße, Lichtfarbe, Zielmarkenposition im Tasterkoordinatensystem, Modulation des Lichts und/oder anhand aufgebrachter Muster möglich. Taststifteinmessungen, wie diese in der klassischen Koordinatenmesstechnik üblich sind, sind bei den erfindungsgemäßen Tastern nicht zwingend erforderlich, da Tastkugellage und Tastkugeldurchmesser photogrammetrisch mit einer oft ausreichenden Genauigkeit erfasst werden können.

Die Messung mit kleinen Tastelementen bringt oft eine hohe Anzahl zerstörter Taststifte (Tastelement, Tasterverlängerung) mit sich. Bei dem erfindungsgemäßen System sind die Taststifte billig und einfach auswechselbar. Teure Sensoren und die Bewegungsachsen werden im Allgemeinen nicht von Kollisionen beschädigt oder verändert, da der Abstand von dem Tastelement recht groß sein kann. Z. B. kann die Schaftlänge größer als der Verfahrbereich des Systems sein, eine Kollision ist so nicht möglich. Eine große Taster- wie Kugelauslenkung relativ zur Schaftlänge ist ohne Schwierigkeiten möglich. Dadurch ergibt sich eine hohe Eigensicherheit des Systems und eine gute Scanfähigkeit. Auch sind hohe Antastgeschwindigkeiten ohne Beschädigung der Objektoberfläche möglich.

Photogrammetriesysteme oder sonstige bekannte optisch arbeitende Sensorsysteme erlauben eine mathematische Ausrichtung des Objekts vor dem eigentlichen Messbeginn aufgrund der Bildinformation über das Objektiv. Damit ist eine punktgenaue Antastung des Objekts bei der eigentlichen taktilen Messung möglich.

Es gibt bei diesem System zwei Arten von elastischen Einflüssen, die zu Messabweichungen führen können.

1. Die Nachgiebigkeit des Objekts selbst (in größeren Bereichen); Einflüsse durch diese können durch Messung mit mindestens zwei Antastkräften auf Null extrapoliert werden,

2. die lokale Nachgiebigkeit durch die Hertz'sche Pressung zwischen Kugel und Objektoberfläche; diese Effekte können bei Bedarf (also bei hochgenauen Messungen oder bei nachgiebigen Objekten) durch eine Messung mit mindestens zwei unterschiedlichen Antastkräften und Extrapolation auf die fiktive Antastkraft "Null" ausgeschaltet werden.

Die Extrapolation auf Kraft "Null" im zweiten Fall ist möglich, da die Deformation nach Hertz gleich einer Konstanten multipliziert mit der (Antastkraft)$^{2/3}$ ist:

$$D = K \cdot F^{2/3}$$

mit:

    D: Deformation an der Kontaktstelle zwischen Objekt und Tastkugel
    F: Kraft (bzw. eine Größe, die proportional zur Antastkraft ist)
    K: Konstante

$$D_1 = K \cdot F_1^{2/3}$$

$$D_2 = K \cdot F_2^{2/3}$$

$$D_1 - D_2 = K \cdot (F_1^{2/3} - F_2^{2/3})$$

Hieraus folgt der Wert von K bei aus der Messung bekannter Differenz ($D_1 - D_2$) sowie bei bekannten $F_1$ und $F_2$. Es können nun die Abplattungen $D_1$ und $D_2$ gegenüber der Antastung mit Kraft "Null" berechnet werden. Die kraftproportionalen Werte sind z. B. die Verfahrwege gerechnet ab der ersten Objektberührung. Alternativ lassen sich diese auch mit Kraftsensoren messen. Ein Kraftsensor kann z. B. die Faser selbst sein, wenn ihre Krümmung photogrammetrisch gemessen wird oder anhand von Änderungen des intern zur Lichtquelle reflektierten/rückgestreuten Lichts bzw. des abgestrahlten Lichts. Es ist sinnvoll, die Messung mit mehreren Antastkräften für alle hochgenauen Messaufgaben durchzuführen, da die effektiven Radien im Berührpunkt zwischen Objekt und Tastelement durch lokale Welligkeiten und Rauheiten stark variieren können.

Liegen Hertz'sche und lineare Nachgiebigkeit in der gleichen Größenordnung, muss mit mindestens drei Kräften angetastet werden, und es muss sowohl die lineare als auch die Hertz'sche Nachgiebigkeitskonstante bestimmt werden, um auf die fiktive Kraft "Null" extrapolieren zu können.

Sollten die Abweichungen von der idealen Kugelform bei kleinen Kugeln als Taster mit Durchmessern unter 0,1 mm nicht vernachlässigbar sein, kann eine richtungsabhängige Korrektur der Antastpunkt-Koordinaten erforderlich sein. Zur Erfassung der Korrekturwerte kommen zwei Verfahren in Frage:

    1. Die Messung der Abweichungen des Tastelements von der Kugelform, durchgeführt unabhängig vom Tastsystem mit gesonderten Messgeräten,

    2. die Messung der Abweichungen des Tastelements von der Kugelform, durchgeführt durch Messung einer Referenzkugel mit dem Tastsystem selbst.

Grundsätzlich ist es auch möglich, eine andere Geometrieform für die Tastelemente zu wählen als die einer Kugel, z. B. Zylinder, der die Faser selbst darstellen kann, oder das verrundete Ende der Faser selbst, als der Tasterverlängerung.

Da das Tastelement (z. B. eine Kugel) je nach Betrachtungsrichtung mehr oder weniger stark vollständig abgebildet wird und auch Schmutz sehr störend wirkt, ist es sinnvoll, die Lage des Tastelements mit sogenannten robusten Ausgleichsalgorithmen zu bestimmen. Zu diesen Algorithmen gehören z. B. die Minimierung der Summe der Abweichungsbeträge (sogenannte L1-Norm).

Zuvor geschilderte Korrekturverfahren sind jedoch nur in Extremfällen notwendig, ohne dass hierdurch die erfindungsgemäße Lehre grundsätzlich beeinträchtigt wird.

Grundsätzlich kann die Beleuchtung des Tastelements, der Zielmarken bzw. des Schafts nicht nur von innen durch den Schaft erfolgen, sondern auch durch geeignete Beleuchtungseinrichtungen von außen.

Hier bietet sich auch eine Variante an, bei der das Tastelement bzw. die Zielmarken Retroreflektoren (Tripelreflektoren, Katzenaugen, spiegelnde Kugeln) sind und aus der Kamera-Blickrichtung extern beleuchtet werden.

Der erfindungsgemäße Taster ist grundsätzlich nicht auf bestimmte Baugrößen der Messobjekte und des Tastelements selbst beschränkt. Er kann sowohl zur Messung ein-, zwei- als auch dreidimensionaler Strukturen eingesetzt werden. Insbesondere kann die Tasterverlängerung als Lichtleiter ausgebildet sein und einen Durchmesser von 20 μm aufweisen. Der Durchmesser des Tastelements wie Tastkugel sollte dann bevorzugterweise 50 μm betragen.

Insbesondere ist vorgesehen, dass der Durchmesser des Tastelementes in etwa 1- bis 3- fach größer als der der Tastverlängerung ist.

Um die Bruchfestigkeit der Tasterverlängerung zu erhöhen, können bei der Verwendung von Lichtleitern als Material diese eine Oberflächenbeschichtung wie Teflon oder eine sonstige bruchhemmende Substanz aufweisen. Eine Ummantelung kann z. B. durch Sputtering ausgebildet werden.

Die Raumlage des Tastelements kann mittels eines zweidimensionalen Messsystems dann bestimmt werden, wenn dem Tastelement zumindest drei Zielmarken zugeordnet sind, deren Bilder zur Bestimmung der räumlichen Lage des Tastelements ausgewertet werden.

Die Erfindung ermöglicht auch ein scannendes Antastverfahren zur Bestimmung von Werkstückgeometrien. Insbesondere können die auszuwertenden Bilder von einem positionsempfindlichen Flächensensor erzeugt werden.

Gegenüber rein mechanisch messenden Tastsystemen ergeben sich mit der erfindungsgemäßen Lehre u.a. folgende Vorteile:

- Elastische und plastische Einflüsse sowie Kriecherscheinungen der mechanischen Halterung und des Antastschaftes gehen nicht in das Messergebnis ein.

- Es lassen sich sehr geringe Antastkräfte realisieren (< 1 N).

- Es ist keine Präzisionsmechanik erforderlich.

- Es lassen sich sehr kleine Tastelemente und Schaftdurchmesser realisieren.

- Die Positionierung des Tastsystemes kann durch die Optik vom Bediener optimal überwacht werden.

- Das Systeme kann direkt an die bestehende Optik eines Koordinatenmessgerätes angebracht werden und das Bildsignal mit einem vorhandenen Bildprozessor ausgewertet werden.

- Geringer Geräteaufwand resultierend aus der Adaption an bestehende optische Koordinatenmessgeräte.

Gegenüber rein optisch messenden Tastsytemen ergeben sich u. a. folgende Vorteile:

- Es werden die tatsächlichen mechanischen Größen gemessen. Eigenschaften der Oberfläche wie Farbe und Reflexionsverhalten gehen nicht in das Messergebnis ein.

- Es können Messungen an dreidimensionalen Strukturen gemacht werden, die für rein optische Systeme nicht zugänglich sind. So lässt sich etwa der Durchmesser und die Formabweichung einer Bohrung in verschiedenen Höhenschnitten erfassen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:

Fig. 1    eine Ausführungsform einer Anordnung zur Messung von Strukturen eines Objekts,

Fig. 2    eine zweite Ausführungsform einer Anordnung zur Messung von Strukturen eines Objekts,

Fig. 3    eine dritte Ausführungsform einer Anordnung zur Messung von Strukturen eines Objekts,

Fig. 4    eine vierte Ausführungsform einer Anordnung zur Messung von Strukturen eines Objekts,

Fig. 5    eine fünfte Ausführungsform einer Anordnung zur Messung von Strukturen eines Objekts,

Fig. 6    eine sechste Ausführungsform einer Anordnung zur Messung von Strukturen eines Objekts,

Fig. 7    einen Abschnitt einer ersten Ausführungsform eines Tasters,

Fig. 8    einen Abschnitt einer zweiten Ausführungsform eines Tasters,

Fig. 9    einen Abschnitt einer dritten Ausführungsform eines Tasters,

Fig. 10    eine siebte Ausführungsform einer Anordnung zur Messung von Strukturen eines Objekts,

Fig. 11    eine achte Ausführungsform einer Anordnung zur Messung von Strukturen eines Objekts und

Fig. 12    ein Blockschaltbild.

In den Figuren, in denen gleiche Elemente grundsätzlich mit gleichen Bezugszeichen versehen sind, sind rein prinzipiell verschiedene Ausführungsformen von Anordnungen zur Messung von Strukturen eines Objektes mittels eines einem Koordinatenmessgerät zugeordneten Tasters dargestellt. Als Ausführungsbeispiel soll die Struktur einer Bohrung 10 in einem Objekt 12 bestimmt werden. Der Rand der Bohrung 10 wird von einem Tastelement 14 abgefahren, der seinerseits von einer Tasterverlängerung 16 ausgeht, die zusammen einen Taster 18 bilden.

Der Taster 18 geht von einer Halterung 20 aus, die zumindest um drei Freiheitsgrade, vorzugsweise um 5 Freiheitsgrade justierbar ist. An der Halterung 20 selbst ist vorzugsweise eine Optik eines Koordinatenmessgeräts 22 montiert. Eine andere Verbindungsart ist gleichfalls möglich. Ausschlaggebend ist jedoch, dass die Optik bzw. ein Sensor des Koordinatenmessgerätes 22 als Einheit mit dem Tastelement 14 in X-, Y- und Z-Richtung verstellbar ist. Unabhängig davon erfolgt eine Justierung des Tastelements 14 zur optischen Achse 24 und zur Fokalebene. Dabei bestehen verschiedene Möglichkeiten, das Tastelement 14, d. h. im Ausführungsbeispiel eine Tastkugel im Schnittpunkt der optischen Achse 24 mit der Fokalebene zu positionieren.

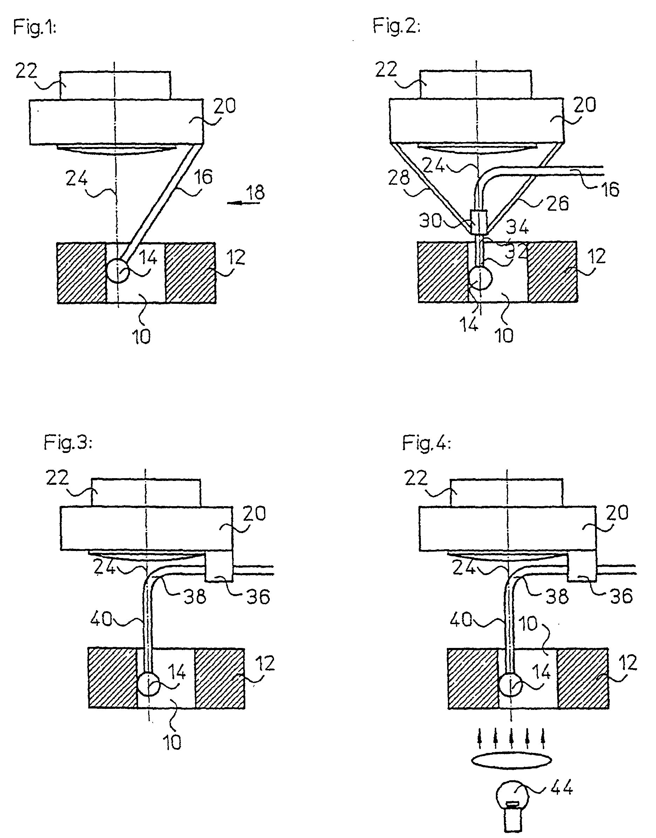

So kann nach dem Ausführungsbeispiel der Fig. 1 die Tasterverlängerung 16 seitlich von der Halterung 20 ausgehend in den Strahlgang 24 eingebracht werden.

Bei dem Ausführungsbeispiel der Fig. 2 gehen von der Halterung 20 Befestigungsarme 26, 28 aus, die außerhalb der Fokalebene enden und als Aufnahme für eine seitlich in die optische Achse 24 hineingeführte Tasterverlängerung 16 dient, die über ein Kupplungsstück 30 mit dem Tastelement 32 verbindbar ist, das über einen stabförmigen Abschnitt 34, der entlang der optischen Achse 24 verläuft, in das eigentliche Tastelement 14 in Form der Kugel übergeht, mittels der die Struktur des Randes der Bohrung 10 bestimmt wird.

Bei der Anordnung gemäß Fig. 3 wird eine L-förmig gebogene Tasterverlängerung 38 von einer von der Halterung 20 ausgehenden Aufnahme 36 gehalten, wobei ein geradlinig verlaufender Endabschnitt 42 der Tasterverlängerung 38 parallel zur optischen Achse 24 verläuft und endseitig in das Tastelement wie Tastkugel 14 übergeht.

Nachdem das Tastelement 14 justiert ist, kann es durch die vorhandene Optik des Koordinatenmessgerätes 22 oder einem entsprechenden Sensor beobachtet werden. Bei Antastung des Randes der Bohrung 12 ändert das Tastelement 14 seine Lage im Kamera- bzw. Sensorfeld. Diese Auslenkung wird durch eine elektronische Bildverarbeitung ausgewertet. Hierdurch wird eine Funktionsweise realisiert, die analog zu einem konventionell messenden Tastsystem wirkt. Dabei kann die Ansteuerung des Koordinatenmessgeräts 22 entsprechend einem konventionell mechanisch messenden Tastsystem erfolgen.

Um das Tastelement 14 optisch zu erfassen, bestehen verschiedene Möglichkeiten, die rein prinzipiell den Fig. 4 bis 6 und 10 und 11 zu entnehmen sind.

So wird nach der Fig. 4 ein Durchlichtverfahren vorgeschlagen, wobei auf dem Sensor-bzw. Kamerafeld der Schatten des Tastelements 14 beobachtet bzw. gemessen wird. Voraussetzung für das der Fig. 4 zu entnehmende Durchlichtverfahren ist, dass die Bohrung 10 durchgehend ist, also das Werkstück 12 vollständig durchsetzt.

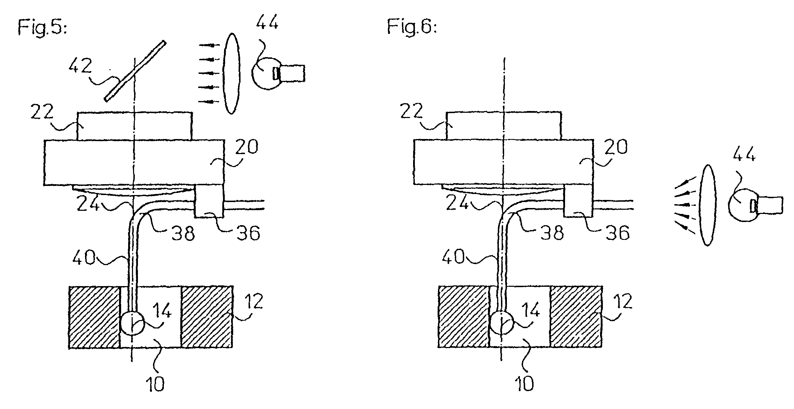

Bei dem Ausführungsbeispiel der Fig.5 wird das Tastelement 14 durch Einspiegelung von Licht entlang des Strahlengangs 24 mit Licht beaufschlagt. Hierzu befindet sich oberhalb des Koordinatenmessgeräts 22 ein Spiegel 42, über den durch das Koordinatenmessgerät 22 und die Halterung 20 hindurch Licht entlang der optischen Achse 24 eingespiegelt wird.

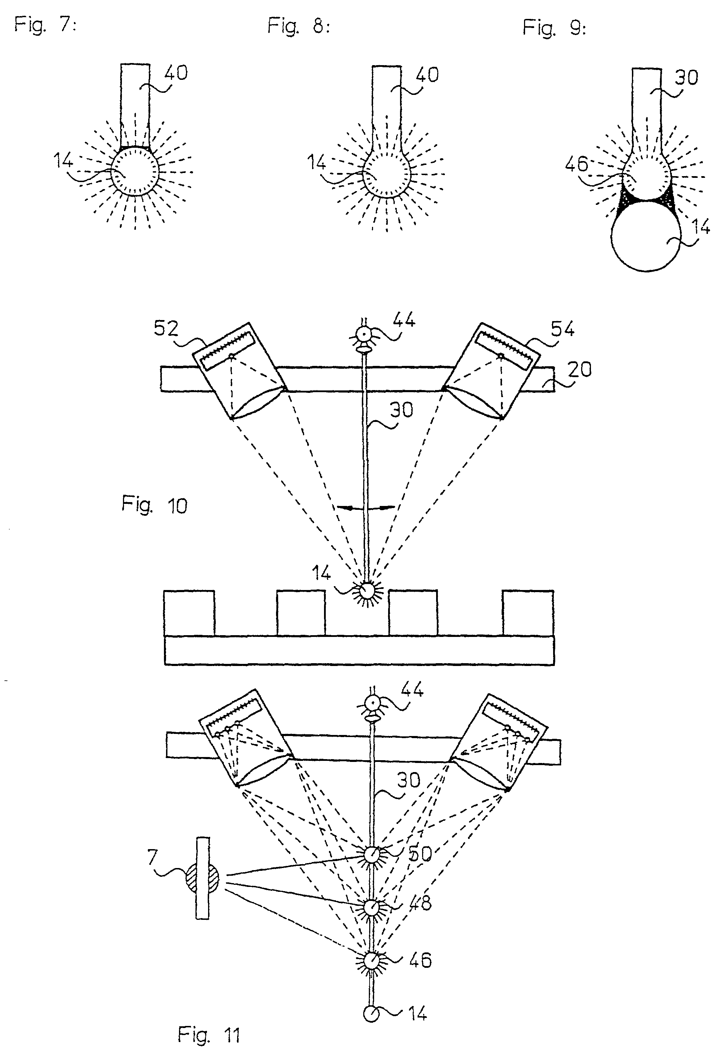

Es wird für die Tasterverlängerung 30 vorzugsweise eine Lichtleitfaser benutzt. Diese bietet auch den Vorteil, dass das Licht durch diese selbst zu dem Tastelement 14 geführt wird, wie dies anhand der Fig. 6 verdeutlicht wird. Die Lichtquelle selbst ist in den Fig. mit den Bezugszeichen 44 versehen.

Das Tastelement 14 weist in den Ausführungsbeispielen eine volumenmäßig abstrahlende Kugelform auf. Dabei kann das Tastelement 14 mit der Tasterverlängerung 30 z. B. durch Kleben oder Schweißen fest verbunden sein. Aber auch eine auswechselbare Verbindung über eine Kupplung ist möglich.

Ist bei dem Ausführungsbeispiel der Fig. 7 das Tastelement 14 mit dem Ende 40 der Tasterverlängerung 30 verklebt, so kann bei dem Ausführungsbeispiel der Fig. 8 das Tastelement 30, d. h. dessen Endabschnitt 40 selbst als Tastelement ausgebildet sein. Hierzu wird vorzugsweise der Endabschnitt 40 endseitig entsprechend geformt. Es besteht aber auch die Möglichkeit, die endseitige Stirnfläche der Tasterverlängerung 30 mit einer reflektierenden Abdeckung zu versehen, um die Funktion der Zielmarke zu erfüllen.

Anstelle der Beobachtung des Tastelementes 14 selbst kann diesem in fester ortsmäßiger Zuordnung eine vorzugsweise ebenfalls kugelförmige Zielmarke 46 zugeordnet sein, die ein Abschnitt der Tasterverlängerung 30 ist oder auf diese aufgesetzt ist, wie dies anhand der Fig. 11 verdeutlicht wird. So weist die Tasterverlängerung 30 endseitig das kugelförmige Tastelement 14 auf. Des Weiteren sind in Abständen zueinander an der Tasterverlängerung 30 kugelförmige Zielmarken 46, 48, 50 angebracht. Somit besteht die Möglichkeit, entweder die Position des Tastelements 14 unmittelbar oder die der diesem eindeutig zugeordneten Zielmarken 46 bzw. 46, 48 bzw. 46, 48, 50 zu beobachten.

Das Tastelement 14 bzw. die Zielmarke 46, 48, 50 kann aus verschiedenen Materialien wie Keramik, Rubin oder Glas bestehen. Ferner kann die optische Qualität der entsprechenden Elemente durch Beschichtungen mit streuenden oder reflektierenden Schichten verbessert werden.

Der Durchmesser der Tasterverlängerung 30 beträgt vorzugsweise weniger als 100 μm, vorzugsweise einen Durchmesser von 20 μm. Das Tastelement 14 bzw. die Zielmarke 46, 48, 50 weist einen größeren Durchmesser auf, vorzugsweise einen zwischen 1,5-und 3-fach größeren Durchmesser als den der Tasterverlängerung 30 wie Lichtleiter.

In dem Bereich, wo der Mantel der Tasterverlängerung 30 von Licht nicht durchsetzt werden muss, kann eine Oberflächenbeschichtung aus Teflon oder einer sonstigen bruchhemmenden Substanz vorgesehen sein.

Das Bild des Tastelements 14 oder einer dieser zugeordneten Zielmarke 46, 48, 50 kann z. B. auf einem CCD-Feld einer optischen Koordinatenmessmaschine abgebildet werden.

Die Verschiebung des Lichtfleckes im CCD-Feld kann mit Subpixelgenauigkeit gemessen werden. Mit dem erfindungsgemäßen Verfahren sind reproduzierbare Messungen mit einer Genauigkeit im μm-Bereich möglich.

Bei dem Ausführungsbeispiel der Fig. 10 und 11 gelangt ein photogrammetrisches Verfahren zur Anwendung. Von einer gemeinsamen Halterung 20 gehen zwei auf das Tastelement 14 ausgerichtete optische Abbildungssysteme wie Kameras 52, 54 aus. Die auf das Tastelement 14 optisch ausgerichteten Kameras 52, 54 ermöglichen eine räumliche Bestimmung des Tastelements 14 mit üblichen aus der Industriephotogrammetrie bekannten Auswertetechniken. Die Verwendung einer redundanten Anzahl von Kameras (zum Beispiel drei) ermöglicht ein Objekt auch zu messen, wenn eine der Kameras abgeschattet ist. Bei kleinen Bohrungen reicht der Einsatz einer Kamera aus, die so optisch auf das Tastelement 14 ausgerichtet ist. Losgelöst hiervon wird zur Bestimmung der Struktur im Objekt entweder ein aktiv lichtabstrahlendes, lichtreflektierendes oder lichtabschattendes Abtastelement 14 bzw. eine Zielmarke 46, 48, 50 benutzt, wobei vorzugsweise aus der Lichtquelle 44 dem Tastelement 14 bzw. den Zielmarken 46, 48, 50 über die als Lichtleitfaser ausgebildete Tasterverlängerung 30 Licht zugeführt wird. Alternativ besteht die Möglichkeit, das Licht selbst in der Tasterverlängerung 30 oder in den Zielmarken 46, 48, 50 bzw. dem Tastelement 14 zu erzeugen, in dem diese z. B. elektrisch leuchtende Bausteine wie LEDs enthalten oder solche sind. Mit der erfindungsgemäßen Lehre ergibt sich ein ideal kontrastreiches und ein ideal kreisförmiges Bild des Tastelements 14 bzw. der Zielmarke 46, 48, 50, sofern diese eine Kugelform aufweisen. Zusätzlich oder alternativ besteht die Möglichkeit, das Tastelement 14 bzw. die Zielmarken 46, 48, 50 fluoreszierend auszuführen, so dass eingestrahltes und abgestrahltes Licht frequenzmäßig getrennt sind, so dass das von dem Tastelement 14 bzw. den Zielmarken 46, 48, 50 erzeugte Bild von der Umgebung getrennt werden kann.

Mit der erfindungsgemäßen Ausbildung eines Koordinatenmessgerätes, mit dem ein Tastelement wie Tastkugel bzw. eine dieser räumlich eindeutig zugeordneten Zielmarke unmittelbar optisch erfasst wird, um aus der direkten optischen Messung des Tastelementes bzw. der Zielmarke die Struktur des Körpers zu bestimmen, lassen sich Strukturen in der Größenordnung von 100 um und weniger, insbesondere im Bereich bis zu 50 μm bestimmen bei einer Messunsicherheit von ± 0,5 μm. Mit dem Koordinatenmessgerät können übliche Messvolumen wie zum Beispiel 0,5 x 0,5 x 0,5 m³ ausgemessen werden.

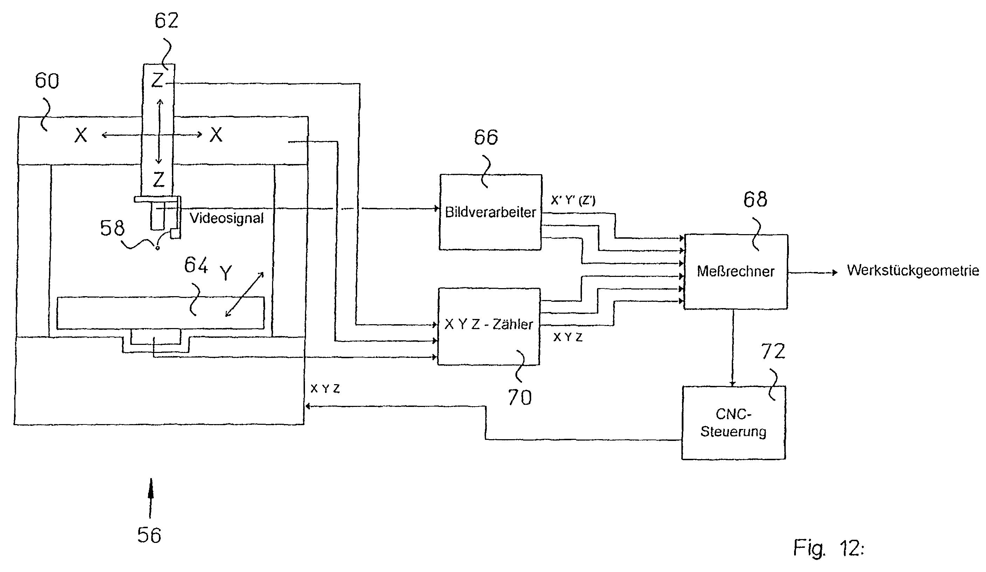

In Fig. 12 ist ein Blockschaltbild dargestellt, um entsprechend der erfindungsgemäßen Lehre in einem Koordinatenmessgerät 56 durch unmittelbare optische Messung der Position eines Tastelementes 58 die Struktur eines Objektes zu bestimmen, wobei durch CNC-Steuerung das Objekt von dem Tastelement 58 angetastet werden soll.

Das Koordinatenmessgerät 56 weist einen üblichen Aufbau auf. Beispielhaft geht das Tastelement 58 von einer Halterung aus, die an einer entlang einer Traverse 60 in X-Richtung verstellbaren Pinole 62 befestigt ist, die ihrerseits in Z-Richtung verstellbar ist. Das Objekt selbst ist auf einem Messtisch 64 befestigt, der in Y-Richtung verfahrbar ist. Tastet das Tastelement 58 das Objekt an, werden aus den der Position des Tastelements 58 entsprechenden Videosignalen mittels einer Bildverarbeitung 66 die Koordinaten X', Y' bzw. Z' des Tastelements 58 berechnet und einem Messrechner 68 zugeführt und in diesem mit den Koordinatenwerten X,Y,Z des Koordinatenmessgerätes 56 verknüpft, die über einen Zähler 70 bestimmt werden. Aus den so berechneten Werten werden einerseits die Objektgeometrie bestimmt und andererseits über eine CNC-Steuerung 72 der CNC-Lauf des Koordinatenmessgerätes 56 gesteuert.

**Patentansprüche**

1. Verfahren zur Messung von Strukturen eines Objekts mittels eines einem Koordinatenmessgerät zugeordneten von einer Tasterverlängerung ausgehenden Tastelements, das mit dem Objekt in Berührung gebracht und sodann seine Position mittelbar oder unmittelbar bestimmt wird,
**dadurch gekennzeichnet,**
**dass** das Tastelement über einen biegeelastischen Schaft als die Tasterverlängerung mit dem Koordinatenmessgerät verbunden wird, dass die Position des Tastelementes oder einer von dem biegeelastischen Schaft ausgehenden dem Tastelement unmittelbar zugeordneten Zielmarke mit einem optischen Sensor direkt bestimmt wird und dass zur Messung der Struktur des Objektes mit dem optischen Sensor bestimmte Kaordinaten des Tastelements bzw. der Zielmarke mit denen des Koordinatenmessgerates verknüpft werden, wobei die Position im Durchlicht- und/oder Auflichtverfahren und/oder durch Selbststrahlen des Tastelementes bzw. der Zielmarke bestimmt wird.

2. Verfahren nach Anspruch 1,
**dadurch gekennzeichnet,**
**dass** das Tastelement und/oder die zumindest eine Zielmarke dem Objekt von dessen sensorzugewandter Seite zugeführt wird.

3. Verfahren nach einem der vorhergehenden Ansprüche,
**dadurch gekennzeichnet,**
**dass** das Tastelement mit dem Sensor als Einheit verstellt wird.

4. Verfahren nach einem der vorhergehenden Ansprüche,
**dadurch gekennzeichnet,**
**dass** eine durch die Berührung des Objekts bedingte Auslenkung des Tastelements optisch bestimmt wird.

5. Verfahren nach einem der vorhergehenden Ansprüche,
**dadurch gekennzeichnet,**
**dass** die Auslenkung des Tastelementes durch Verschiebung dessen Bildes oder eines einer Zielmarke auf einem Sensorfeld erfaßt wird.

6. Verfahren nach einem der vorhergehenden Ansprüche,
**dadurch gekennzeichnet,**
**dass** die Auslenkung des Tastelementes durch Auswerten einer Kontrastfunktion bestimmt wird.

7. Verfahren nach einem der vorhergehenden Ansprüche,
**dadurch gekennzeichnet,**
**dass** die Auslenkung des Tastelementes aus einer Größenänderung eines Bildes einer Zielmarke bestimmt wird, die aus dem strahlenoptischen Zusammenhang zwischen Objekt-Abstand und Vergrößerung resultiert.

8. Verfahren nach einem der vorhergehenden Ansprüche,
**dadurch gekennzeichnet,**
**dass** die Auslenkung des Tastelementes durch scheinbare Größenänderung einer Zielmarke bestimmt wird, die aus dem Kontrastverlust durch Defokussierung resultiert.

9. Verfahren nach einem der vorhergehenden Ansprüche,
**dadurch gekennzeichnet,**
**dass** die Auslenkung senkrecht zur optischen Achse eines elektronischen Bildverarbeitungssystems durch dieses bestimmt wird.

10. Verfahren nach einem der vorhergehenden Ansprüche,
**dadurch gekennzeichnet,**
**dass** mittels eines zweidimensionalen Meßsystems die räumliche Position des Tastelementes mittels zumindest drei diesen zugeordneter Zielmarken bestimmt wird.

11. Verfahren nach einem der vorhergehenden Ansprüche,
**dadurch gekennzeichnet,**
**dass** eine Tasterverlängerung oder ein Abschnitt dieser als räumlich ausgedehnte Zielmarke benutzt wird, deren Position relativ zum Tastkörper in frei wählbaren Querschnitten gemessen wird.

12. Verfahren nach einem der vorhergehenden Ansprüche,
**dadurch gekennzeichnet,**
**dass** auf der Tasterverlängerung angeordnete Zielmarken zur Bestimmung der Position des Tastelementes photogrammetrisch (zumindeset zwei Kameras) erfaßt werden.

13. Verfahren nach einem der vorhergehenden Ansprüche,
**dadurch gekennzeichnet,**
**dass** die Position des Tastelementes photogrammmetrisch (zumindest zwei Kameras) gemessen wird.

14. Koordinatenmessgerät zur Messung von Strukturen eines Objekts (12) mit einem ein Tastelement (14) und eine Tasterverlängerung (16, 38) umfassenden Taster, einem Sensor zur optischen Bestimmung des Tastelements (14) und/oder zumindest einer diesem unmittelbar zugeordneten Zielmarke, und einer Auswerteeinheit, mit der aus der Position des optischen Sensors zum Koordinatensystem des Koordinatenmessgerätes und der mittels des optischen Sensors unmittelbar gemessenen Position des Tastelements und/oder der Zielmarke die Strukturen berechenbar sind,
**dadurch gekennzeichnet,**
**daß** die Tasterverlängerung (16, 38) biegeelastisch ausgebildet ist.

15. Koordinatenmessgerät nach Anspruch 14,
**dadurch gekennzeichnet,**
**dass** das Tastelement (14) und/oder die Zielmarke (46, 48, 50) als Reflektor ausgebildet ist.

16. Koordinatenmessgerät nach Ansprüche 14 oder 15,
**dadurch gekennzeichnet,**
**dass** das Tastelement (14) und/oder die Zielmarke (46, 48, 50) selbststrahlend ausgebildet ist.

17. Koordinatenmessgerät nach einem der Ansprüche 14-16,
**dadurch gekennzeichnet,**
**dass** das Tastelement (16) und/oder die Zielmarke (46, 48, 50) ein Strahlung räumlich abstrahlender oder reflektierender Körper wie Kugel oder Zylinder ist.

18. Koordinatenmessgerät nach einem der Ansprüche 14-17
**dadurch gekennzeichnet,**
**dass** die Tasterverlängerung (38) zumindest abschnittsweise als Lichtleiter ausgebildet ist oder einen solchen umfaßt.

19. Koordinatenmessgerät nach einem der Ansprüche 14-18,
**dadurch gekennzeichnet,**
**dass** die Tastverlängerung (38, 40) oder zumindest ein Abschnitt von dieser das Tastelement (14) und/oder die Zielmarke (46, 48) ist.

20. Koordinatenmessgerät nach einem der Ansprüche 14-19,
**dadurch gekennzeichnet,**

**dass** dem Tastelement (14) mehrere Zielmarken (46, 48) zugeordnet sind, die vorzugsweise von der Tasterverlängerung (30) ausgehen oder Abschnitte von dieser bilden.

21. Koordinatenmessgerät nach einem der Ansprüche 14-20,
**dadurch gekennzeichnet,**
**dass** die Tasterverlängerung (30) L-förmig zur Ausrichtung auf eine optische Achse (24) gebogen ist.

22. Koordinatenmessgerät nach einem der Ansprüche 14-21,
**dadurch gekennzeichnet,**
**dass** die Tasterverlängerung (30) cndseitig als Tastelement (14) ausgebildet ist.

23. Koordinatenmessgerät nach einem der Ansprüche 14-22,
**dadurch gekennzeichnet,**
**dass** das Tastelement (14) und/oder die Zielmarke (46, 48, 50) auswechselbar mit der Tasterverlängerung (30) verbunden sind.

24. Koordinatenmessgerät nach einem der Ansprüche 14-23,
**dadurch gekennzeichnet,**
**dass** das Tastelement (14) und/oder die Zielmarke (46, 48, 50) mit der Tasterverlängerung (30) durch Kleben oder Schweißen verbunden sind.

25. Koordinatenmessgerät nach einem der Ansprüche 14-24,
**dadurch gekennzeichnet,**
**dass** der Taster (18) von einer um zumindest 3 Freiheitsgrade, vorzugsweise um 5 Freiheitsgrade justierbaren Halterung (30) vorzugsweise auswechselbar ausgeht.

26. Koordinatenmessgerät nach einem der Ansprüche 14-25,
**dadurch gekennzeichnet,**
**dass** der Taster (18) von einer Halterung (20) ausgeht, die mit dem Sensor eine Eiaheit bildet bzw, mit dem Sensor verbunden ist.

27. Koordinatenmessgerät nach einem der Ansprüche 14-26,
**dadurch gekennzeichnet,**
**dass** der Taster (18) dem Objekt (12) von dessen sensorzugewandten Seite zuführbar ist.

28. Koordinatenmessgerät nach einem der Ansprüche 14-27,
**dadurch gekennzeichnet,**
**dass** das Tastelement (14) und/oder die Zielmarke (46, 48, 50) ein seibstleuchtendes elektronisches Element wie LED aufweist oder ein solches ist.

29. Koordinatenmessgerät nach einem der Ansprüche 14-28,
**dadurch gekennzeichnet,**
**dass** der Sensor ein Bildverarbeitungssensor ist.

30. Koordinatenmessgerät nach einem der Ansprüche 14-29,
**dadurch gekennzeichnet,**
**dass** der Sensor ein positionsempfindlicher Fiächensensor ist.

31. Koordinatenmessgerät nach einem der Ansprüche 14-30,
**dadurch gekennzeichnet,**
**dass** der Durchmesser des Tastelementes (14) in etwa 1- bis 3-fach größer als der der Tastverlängerung (38) ist.

32. Koordinatenmessgerät nach einem der Ansprüche 14-31,
**dadurch gekennzeichnet,**
**dass** das Tastelement (30) endseitig eine Zylinderform aufweist und als Tastelement (14) ausgebildet ist.

33. Koordinatenmessgerät nach einem der Ansprüche 14-32,
**dadurch gekennzeichnet,**
**dass** die Tasterverlängerung (30) zur Ausbildung des Tastelementes sphärisch verrundet ist.

**Claims**

1. A method for measurement of structures of an object by means of a feeler element assigned to a coordinate measuring instrument extending from a feeler extension, that the feeler element is brought into contact with an object and its position is then indirectly or directly determined,
wherein
the feeler element is connected to the coordinate measuring instrument via an elastic-to-bending shaft as the feeler extension, that the position of the feeler element or of a target extending from the elastic-to-bending shaft being directly assigned to the feeler element is directly determined with an optical sensor and that for measuring the structure of the object using the optical sensor coordinates of the feeler element and of the target, respectively, are linked with those of the coordinate measuring instrument, with the position being determined in a transmitted light method and/ or reflected light method and/ or by self-emission of the feeler element and the target, respectively.

2. Method according to Claim 1
wherein

the feeler element and/ or the at least one target is moved towards the object from its side facing towards the sensor.

3. Method according to one of the preceding Claims. wherein
the feeler element is adjusted with the sensor as unit.

4. Method according to one of the preceding Claims. wherein
a deflection of the feeler element resulting from the contact with the object is optically determined.

5. Method according to one of the preceding Claims. wherein
the deflection of the feeler clement is measured by displacement of its image or of an image of a target on a sensor field.

6. Method according to one of the preceding Claims, wherein
the deflection of the feeler element is determined by evaluation of a contrast function.

7. Method according to one of the preceding Claims, wherein
the deflection of the feeler element is determined from a seize change of an image of a target resulting from the geometrical-optical correlation between object distance and enlargement.

8. Method according to one of the preceding Claims, wherein
the deflection of the feeler element is determined from apparent seize change of a target resulting from loss of contrast due to defocusing.

9. Method according to one of the preceding Claims. wherein
the deflection vertical to the optical axis of an electronic image-processing system is determined by the latter.

10. Method according to one of the preceding Claims. wherein
the spatial position of the feeler element is determined using a two-dimensional measurement system by means of at least three targets assigned thereto.

11. Method according to one of the preceding Claims. wherein
a feeler extension or a section thereof if used as spatially extended target whose position is measured relative to the feeler body in freely selectable cross-sections.

12. Method according to one of the preceding Claims, wherein
targets arranged on the feeler extension for determining the position of the feeler element are measured by photogrammetry (at least two cameras).

13. Method according to one of the preceding Claims, wherein
the position of the feeler element is measured by photogrammetry (at least two cameras).

14. Coordinate measuring instrument for measurement of structures of an object (12) by means of a feeler comprising a feeler element (14) and a feeler extension (16, 38), a sensor for optical determination of the feeler element (14) and/ or at least one target directly assigned thereto, and an evaluation unit using which the structures can be calculated from the position of the optical sensor relative to the coordinate system of the coordinate measuring instrument and from the position of the feeler element and/ or of the target measured directly using the optical sensor.
wherein
the feeler extension (16, 38) is designed elastic to bending.

15. Coordinate measuring instrument according to Claim 14,
wherein
the feeler element (14) and/ or the target (46, 48, 50) is designed as a reflector.

16. Coordinate measuring instrument according to Claim 14 or 15,
wherein
the feeler element (14) and/or the target (46, 48, 50) is designed self-emitting.

17. Coordinate measuring instrument according to one of the Claims 14 to 16.
wherein
the feeler element (16) and/ or the target (46, 48, 50) is a body such as a hall or a cylinder spatially emitting or reflecting a beam.

18. Coordinate measuring instrument according to one of the Claims 14 to 17,
wherein
the feeler extension (38) is designed at least in some sections as a light guide or comprising a light guide.

19. Coordinate measuring instrument according to one of the Claims 14 to 18.
wherein
the feeler extension (38, 40) or at least a section thereof is the feeler element (14) and/ or the target (46, 48).

20. Coordinate measuring instrument according to one of the Claims 14 to 19,
wherein
several targets (46. 48) are assigned to the feeler element (14) extending preferably from the feeler extension (30) or forming sections thereof.

21. Coordinate measuring instrument according to one of the Claims 14 to 20,
wherein
the feeler extension (30) is designed L-shaped for alignment with an optical axis (24).

22. Coordinate measuring instrument according to one of the Claims 14 to 21,
wherein
the feeler extension (30) is designed at the end as a feeler element (14).

23. Coordinate measuring instrument according to one of the Claims 14 to 22.
wherein
the feeler element (14) and/ or the target (46, 48, 50) are interchangeably connected to the feeler extension (30).

24. Coordinate measuring instrument according to one of the Claims 14 to 23.
wherein
the feeler element (14) and/ or the target (46, 48, 50) arc connected to the feeler extension (30) by gluing or welding.

25. Coordinate measuring instrument according to one of the Claims 14 to 24,
wherein
the feeler (18) extends from a holder (30) that is adjustable by at least 3 degrees of freedom, preferably 5, preferably interchangeable.

26. Coordinate measuring instrument according to one of the Claims 14 to 25,
wherein
the feeler (18) extends from a holder (20) that forms a unit with the sensor and is connected with the sensor, respectively.

27. Coordinate measuring instrument according to one of the Claims 14 to 26,
wherein
the feeler (18) is moved towards the object (12) from its side facing towards the sensor.

28. Coordinate measuring instrument according to one of the Claims 14 to 27,
wherein
the feeler element (14) and/ or the target (46, 48, 50) has or is a self-lighting electronic element such as LED.

29. Coordinate measuring instrument according to one of the Claims 14 to 28.
wherein
the sensor is an image-processing sensor.

30. Coordinate measuring instrument according to one of the Claims 14 to 29,
wherein
the sensor is a position-sensitive surface sensor.

31. Coordinate measuring instrument according to one of the Claims 14 to 30,
wherein
the diameter of the feeler (14) is about 1 to 3 times greater than that of the feeler extension (38).

32. Coordinate measuring instrument according to one of the Claims 14 to 31,
wherein
the feeler extension (30) has at its end a cylindrical form and is designed as a feeler element (14).

33. Coordinate measuring instrument according to one of the Claims 14 to 32,
wherein
the feeler extension (30) is spherically rounded for formation of the feeler element.

**Revendications**

1. Procédé de mesure des structures d'un objet à l'aide d'un élément de détection associé à un appareil de mesure de coordonnées, et partant d'un prolongement de détection, pour venir en contact avec l'objet et déterminer ensuite sa position de manière directe ou indirecte,
**caractérisé en ce que**

l'élément de détection est relié à l'appareil de mesure de coordonnées par l'intermédiaire d'une tige élastique en flexion constituant un prolongement de détection,
on détermine directement la position de l'élément de détection ou d'un repère cible associé directement à l'élément de détection partant de la tige élastique souple, à l'aide d'un capteur optique, et
pour mesurer la structure de l'objet avec le capteur optique, on combine les coordonnées déterminées de l'élément de détection ou du repère cible à celles de l'appareil de mesure de coordonnées,
la position se déterminant par un procédé d'éclairage par transparence et/ou par réflexion et/ou par le rayonnement direct de l'élément de détection ou du repère cible.

2. Procédé selon la revendication 1,
**caractérisé en ce que**
l'élément de détection et/ou au moins un repère cible arrivent sur l'objet à partir de son côté tourné vers le capteur.

3. Procédé selon l'une quelconque des revendications précédentes,
**caractérisé en ce que**
l'élément de détection se déplace comme un ensemble avec le capteur.

4. Procédé selon l'une quelconque des revendications précédentes,
**caractérisé en ce qu'**
on détermine de manière optique le débattement de l'élément de détection entraîné par le contact de l'objet.

5. Procédé selon l'une quelconque des revendications précédentes,
**caractérisé en ce qu'**
on détecte le débattement de l'élément de détection par déplacement de son image ou d'un repère cible dans un champ de capteurs.

6. Procédé selon l'une quelconque des revendications précédentes,
**caractérisé en ce qu'**
on détermine le débattement de l'élément de détection par l'exploitation d'une fonction de contraste.

7. Procédé selon l'une quelconque des revendications précédentes,
**caractérisé en ce qu'**
on détermine le débattement de l'élément de détection à partir d'une variation de taille d'une image d'un repère cible résultant de la relation optique des rayonnements entre la distance objet et l'agrandissement.

8. Procédé selon l'une quelconque des revendications précédentes,
**caractérisé en ce qu'**
on détermine le débattement de l'élément de détection par une variation apparente de la dimension d'un repère cible résultant de la perte de contraste par défocalisation.

9. Procédé selon l'une quelconque des revendications précédentes,
**caractérisé en ce qu'**
on détermine le débattement perpendiculairement à l'axe optique d'un système de traitement électronique d'images, à l'aide de celui-ci.

10. Procédé selon l'une quelconque des revendications précédentes,
**caractérisé en ce qu'**
à l'aide d'un système de mesure à deux dimensions, on détermine la position dans l'espace de l'élément de détection à l'aide d'au moins trois repères cibles associés à celui-ci.

11. Procédé selon l'une quelconque des revendications précédentes,
**caractérisé en ce qu'**
on utilise un prolongement de détection ou un segment de celui-ci comme un repère cible étendu dans l'espace dont on mesure la position par rapport à l'organe de détection dans des sections librement choisies.

12. Procédé selon l'une quelconque des revendications précédentes,
**caractérisé en ce qu'**
on détecte les repères cibles prévus sur le prolongement de détection pour déterminer la position de l'élément de détection par un procédé photogrammétrique (au moins deux caméras).

13. Procédé selon l'une quelconque des revendications précédentes,
**caractérisé en ce qu'**
on mesure la position de l'élément de détection par photogrammétrie (avec au moins deux caméras).

14. Appareil de mesure de coordonnées pour mesurer les structures d'un objet (12) à l'aide d'un capteur comprenant un élément de détection (14) et un prolongement de détecteur (16, 38), d'un capteur pour déterminer optiquement l'élément de détection (14) et/ou au moins un repère cible associé directement à celui-ci et une unité de traitement qui permet de calculer à partir de la position du capteur optique par rapport au système de coordonnées de l'appareil de mesure de coordonnées et de la position de l'élément de détection et/ou du repère cible, mesurées directement à l'aide du capteur optique pour calculer les structures,
**caractérisé en ce que**
le prolongement de détection (16, 38) est élastique souple.

15. Appareil de mesure de coordonnées selon la revendication 14,
**caractérisé en ce que**
l'élément de détection (14) et/ou le repère cible (46, 48, 50) sont réalisés sous la forme d'un réflecteur.

16. Appareil de mesure de coordonnées selon les revendications 14 et/ou 15,

**caractérisé en ce que**
l'élément de détection (14) et/ou le repère cible (46, 48, 50) sont auto-rayonnants.

17. Appareil de mesure de coordonnées selon l'une des revendications 14 et/ou 16,
    **caractérisé en ce que**
    l'élément de détection (16) et/ou le repère cible (46, 48, 50) est le rayonnement d'un corps tel qu'une bille ou un cylindre qui rayonne ou qui réfléchit dans l'espace.

18. Appareil de mesure selon l'une des revendications 14 à 17,
    **caractérisé en ce que**
    le prolongement de détection (38) est réalisé au moins par segments sous la forme d'un guide de lumière ou comporte un tel guide de lumière.

19. Appareil de mesure selon l'une des revendications 14 à 18,
    **caractérisé en ce que**
    le prolongement de détection (38, 40) ou au moins un segment de celui-ci est l'élément de détection (14) et/ou le repère cible (46, 48).

20. Appareil de mesure de coordonnées selon l'une des revendications 14 à 19,
    **caractérisé en ce que**
    l'élément de détection (14) comporte plusieurs repères cibles (46, 48) qui partent, de préférence, du prolongement de détection (30) ou constituent des segments de celui-ci.

21. Appareil de mesure de coordonnées selon l'une des revendications 14 à 20,
    **caractérisé en ce que**
    le prolongement de détection (30) est en forme de L pour être aligné sur un axe optique (24).

22. Appareil de mesure de coordonnées selon l'une des revendications 14 à 21,
    **caractérisé en ce que**
    le prolongement de détection (30) est réalisé en extrémité comme élément de détection (14).

23. Appareil de mesure de coordonnées selon l'une des revendications 14 à 22,
    **caractérisé en ce que**
    l'élément de détection (14) et/ou de repère cible (46, 48, 50) sont reliés de manière amovible au prolongement de détection (30).

24. Appareil de mesure de coordonnées selon l'une des revendications 14 à 23,
    **caractérisé en ce que**
    l'élément de détection (14) et/ou le repère cible (46, 48, 50) sont reliés au prolongement de détection (30),par collage ou soudage.

25. Appareil de mesure de coordonnées selon l'une des revendications 14 à 24,
    **caractérisé en ce que**
    le palpeur (18) est le prolongement d'un support (30) notamment interchangeable, ajustable sur au moins 3 degrés de liberté et, de préférence, selon 5 degrés de liberté.

26. Appareil de mesure de coordonnées selon l'une des revendications 14 à 25,
    **caractérisé en ce que**
    le palpeur (18) est relié à un support (20) qui constitue un ensemble avec le capteur ou est relié au capteur.

27. Appareil de mesure de coordonnées selon l'une des revendications 14 à 26,
    **caractérisé en ce que**
    le palpeur (18) est conduit vers l'objet (12) à partir de son côté opposé au capteur.

28. Appareil de mesure de coordonnées selon l'une des revendications 14 à 27,
    **caractérisé en ce que**
    l'élément de détection (14) et/ou le repère cible (46, 48, 50) comportent un élément électronique auto-lumineux comme un élément LED ou est constitué par un tel élément.

29. Appareil de mesure de coordonnées selon l'une des revendications 14 à 28,
    **caractérisé en ce que**
    le capteur est un capteur de traitement d'images.

30. Appareil de mesure de coordonnées selon l'une des revendications 14 à 29,
    **caractérisé en ce que**
    le capteur est un capteur plat, sensible à la position.

31. Appareil de mesure de coordonnées selon l'une des revendications 14 à 30,
    **caractérisé en ce que**
    le diamètre de l'élément de détection (14) est supérieur de 1 à 3 fois au prolongement de détection (38).

32. Appareil de mesure de coordonnées selon l'une des revendications 14 à 31,
    **caractérisé en ce que**
    l'élément de détection (30) comporte en extrémité une forme cylindrique et est réalisé comme élément de détection.

33. Appareil de mesure de coordonnées selon l'une des revendications 14 à 32,
    **caractérisé en ce que**

le prolongement de détection (30) est arrondi sous forme sphérique pour former un élément de détection.

Fig.1:

Fig.2:

Fig.3:

Fig.4:

Fig.5:

Fig.6:

Fig. 7:

Fig. 8:

Fig. 9:

Fig. 10

Fig. 11

Fig. 12: